# FASCICULE DE BREVET EUROPEEN

(11) **EP 4 256 184 B1**
(45) Date de publication et mention de la délivrance du brevet: **01.01.2025**
(21) Numéro de dépôt: 21824622.1
(22) Date de dépôt: 24.11.2021
(51) Int. Cl.: F02C 3/107, F02C 7/36, F16H 57/04

(54) **SYSTÈME DE TRANSMISSION DE PUISSANCE COMPORTANT UNE GOUTTIÈRE DE RÉCUPÉRATION D'HUILE AMÉLIORÉE**
KRAFTÜBERTRAGUNGSSYSTEM MIT VERBESSERTEM ÖLRÜCKGEWINNUNGSKANAL
POWER TRANSMISSION SYSTEM COMPRISING AN IMPROVED OIL RECOVERY CHANNEL

(30) Priorité: 03.12.2020 FR 2012574
(43) Date de publication de la demande: 11.10.2023
(73) Titulaire: SAFRAN, 75015 Paris (FR); Safran Transmission Systems, 92700 Colombes (FR)
(72) Inventeur: MARCOS IZQUIERDO, Juan-Luis, 77550 MOISSY-CRAMAYEL (FR); CAILLER, Mélody Elisabeth Laurent, 77550 MOISSY-CRAMAYEL (FR); GEDIN, Patrice Jocelyn Francis, 77550 MOISSY-CRAMAYEL (FR); SEREY, Jean-Pierre, 77550 MOISSY-CRAMAYEL (FR)
(74) Mandataire: Gevers & Orès
(86) Numéro de dépôt international: PCT/FR2021/052078
(87) Numéro de publication internationale: WO 2022/117932

(56) Documents cités:
- FR-A1- 2 987 402
- FR-A1- 3 081 513
- FR-A1- 3 084 407
- FR-A1- 3 084 427
- FR-A1- 3 095 243

## Description

### Domaine technique de l'invention

Le domaine de l'invention est celui des systèmes de transmission de puissance à réducteur d'aéronef, et plus particulièrement celui des gouttières de récupération d'huile équipant un réducteur d'un tel système de transmission de puissance.

### Arrière-plan technique

L'état de la technique comprend notamment les documents FR-A1-3.084.427, US-B1-6.223.616, FR-A1-3.052.522 et les demandes FR-A1-3.084.407, FR-A1-3.081.513, FR-A1-3.095.243, FR-A1-3.095.243, et FR-A1 -2.987.402.

Certaines turbomachines telles que des turboréacteurs à double flux équipés d'une soufflante, ou des turbopropulseurs à hélice simple ou à doublet d'hélices contrarotatives sont équipées d'un système de transmission de puissance comportant pour l'essentiel un réducteur de vitesse différentiel à train d'engrenage épicycloïdal ou un réducteur de vitesse à train d'engrenage planétaire (désigné par l'acronyme anglais « RGB » pour « *Reduction Gear Box »).* Les réducteurs différentiels à train d'engrenage épicycloïdal, c'est-à-dire dans lesquels tous les organes sont mobiles, s'appliquent aux turbopropulseurs à doublet d'hélices. Les réducteurs planétaires, c'est-à-dire dans lesquels le porte-satellites est fixe et la couronne est mobile, s'appliquent pour leur part aux turbopropulseurs à une hélice ou aux turboréacteurs à double flux équipés d'une soufflante.

Dans ce dernier cas, d'une manière générale, un arbre de transmission de puissance entraîne l'arbre de soufflante du turboréacteur double flux ou l'arbre de rotor des hélices par l'intermédiaire du réducteur de vitesse. L'arbre de soufflante ou l'arbre d'hélice est supporté et guidé par des paliers qui comprennent des éléments roulants tels que des billes ou des rouleaux.

De tels réducteurs de vitesses sont équipés de plusieurs roues et/ou pignons d'engrenage rotatifs dont la lubrification est essentielle au bon fonctionnement de la turbomachine et à son rendement. Lorsque le réducteur de vitesse n'est pas suffisamment lubrifié, les frottements entre les dents des roues et/ou pignons d'engrenage ou au niveau des paliers entraînent leur usure prématurée et provoquent également une baisse du rendement du réducteur de vitesse. Ces paliers, roues et/ou pignons d'engrenage des réducteurs de vitesse peuvent produire une puissance thermique élevée pour garantir un bon rendement impliquant la nécessité d'un système de lubrification conçu pour envoyer un débit d'huile important pouvant atteindre plusieurs milliers de litres par heure pour lubrifier le réducteur de vitesse et les paliers et les refroidir. L'un des inconvénients d'un tel système de lubrification est la difficulté de pouvoir récupérer et évacuer un tel débit d'huile.

Le système de lubrification comprend un ou plusieurs carters formant une enceinte dans laquelle est contenu le réducteur de vitesse et les paliers. L'évacuation de l'huile, s'effectue de manière générale vers la partie basse de l'enceinte, c'est-à-dire à « six heures ». L'enceinte comprend également des moyens d'évacuation comme des canalisations qui renvoient l'huile dans le système de lubrification. Dans le cas d'un réducteur de vitesse à train d'engrenage épicycloïdal, dans lequel le solaire et le porte-satellites sont rotatifs alors que la couronne externe est fixe, des moyens d'évacuation sont prévus au voisinage d'une partie inférieure de la couronne externe de manière à évacuer l'huile des parties internes du réducteur de vitesse vers la partie radialement interne de l'enceinte.

Au contraire, dans le cas d'un réducteur de vitesse planétaire dont la couronne externe est rotative, l'évacuation est plus complexe. En effet, lors de la rotation de la couronne externe, l'huile est projetée par effet centrifuge sur toute la paroi de l'enceinte dont le volume est assez important. L'huile progresse par gravité vers la partie radialement interne de l'enceinte pour son évacuation. Cependant, la récupération n'est pas rapide et efficace compte tenu du débit élevé d'huile circulant dans l'enceinte et dans le système de lubrification.

Pour remédier à cet inconvénient, on a proposé des réducteurs de vitesse à train d'engrenage épicycloïdal comportant des systèmes de récupération d'huile évitant que l'huile ne s'accumule dans l'enceinte en formant des zones d'accumulation et évacuant l'huile rapidement. Un tel système comprend une gouttière annulaire agencée autour de la couronne externe du réducteur de vitesse, chargée d'assurer la récupération de l'huile et de la canaliser en direction d'une chambre de récupération d'huile.

Une telle gouttière a généralement des formes assez simples et présente en section axiale une forme générale en U épousant la couronne du réducteur.

La couronne du réducteur est généralement constituée de deux demi-brides à dentures inversées, assemblées l'une à l'autre par des moyens de vissage.

Or, on a constaté que, lors de la rotation de la couronne, les moyens de vissage, qui font saillie à partir des faces libres des brides, avaient tendance à produire d'importantes turbulences aérodynamiques, sous la forme d'écoulements tourbillonnaires qui, d'une part, consomment de la puissance mécanique en pure perte et d'autre part perturbent la récupération de l'huile.

### Objectif de l'invention

La présente invention a donc pour objectif de fournir un système de récupération comportant une gouttière améliorée visant à réduire ces perturbations.

### Exposé de l'invention

A cet effet, l'invention propose un système de transmission de puissance pour une turbomachine d'aéronef, comportant :
- un réducteur de vitesse comprenant un pignon solaire mobile en rotation autour d'un axe X, une couronne mobile en rotation autour de l'axe X, et des pignons satellites portés par un porte-satellites, engrenant avec le pignon solaire et la couronne, ladite couronne comportant deux demi-couronnes portant chacune des dents d'engrènement avec les pignons satellites et comportant des brides annulaires externes d'orientation radiale qui sont serrées l'une contre l'autre par des premiers moyens de fixation qui traversent lesdites brides, des axes Y desdits premiers moyens de fixation étant parallèles à l'axe X et répartis sur une circonférence de diamètre D1,
- une gouttière annulaire de récupération d'huile centrifugée, s'étendant autour desdites brides, cette gouttière ayant en section axiale une forme générale en U entourant les brides et comportant une paroi de fond annulaire d'axe X reliée à deux parois annulaires latérales sensiblement perpendiculaires à l'axe X,
caractérisé en ce que :
- les parois annulaires latérales de la gouttière comprennent des bords périphériques internes ayant un diamètre interne D2 prédéterminé inférieur au diamètre D1,
- la paroi de fond et les parois latérales de la gouttière sont agencées, respectivement par rapport à des bords périphériques externes des brides et par rapport aux premiers moyens de vissage avec des jeux prédéterminés J1 et J2,
- ledit diamètre interne D2 prédéterminé et lesdits jeux prédéterminés J1, J2 de la gouttière étant configurés de manière à ce que la gouttière coiffe les brides et les premiers moyens de fixation,
- et en ce que la gouttière est formée par un assemblage axial d'au moins deux pièces, dont une première pièce comprend au moins une partie de la paroi de fond, et dont une deuxième pièce comprend une des parois latérales.

L'invention permet ainsi avantageusement de proposer un système de transmission de puissance dont le réducteur comporte une gouttière formant un carénage placé au plus près de la couronne, par conséquent apte à limiter les perturbations aérodynamiques induites par les premiers moyens de fixation lors de la rotation de la couronne. Ceci induit une diminution des pertes mécaniques et une amélioration de la récupération de l'huile.

Selon d'autres caractéristiques de l'invention :
- les première et deuxième pièces sont fixées l'une à l'autre par des seconds moyens de fixation dont des axes Z sont parallèles à l'axe X et qui sont répartis sur une circonférence de diamètre D3 supérieur à D1,
- selon un premier mode de réalisation de l'invention, la première pièce comprend une des parois latérales, une partie de la paroi de fond et une première collerette annulaire de fixation se prolongeant radialement vers l'extérieur pour former une partie de fixation de la gouttière, et la deuxième pièce comprend l'autre paroi latérale et une autre partie de la paroi de fond, et une seconde collerette annulaire de fixation, les première et seconde collerettes étant configurées pour être fixées axialement l'une à l'autre.
- selon un second mode de réalisation de l'invention, la première pièce comprend la paroi de fond et une unique collerette annulaire de fixation se prolongeant radialement vers l'extérieur pour former une partie de fixation de la gouttière, la deuxième pièce comprend une des parois latérales de la gouttière et une troisième pièce de la gouttière comprend l'autre paroi latérale,
- la paroi de fond et les bords périphériques externes des brides annulaires des demi-couronnes sont séparés par le jeu radial J1 qui est compris entre 5 et 10 mm,
- chacune des parois latérales est séparée des premiers moyens de fixation par le jeu axial J2 qui est compris entre 4 et 8 mm,
- le diamètre interne D2 est séparé, par rapport à un diamètre minimal d'une circonférence passant par les premiers moyens de fixation, par un jeu radial J3 d'au plus 1 mm.

L'invention concerne aussi un procédé d'assemblage d'un système de transmission selon le premier mode de réalisation, qui comporte :
- une première étape au cours de laquelle on fixe la partie de fixation de la première pièce à un carter fixe annulaire du réducteur,
- une deuxième étape au cours de laquelle on met en position les demi-couronnes du réducteur,
- une troisième étape au cours de laquelle on fixe la deuxième pièce à la première pièce.

L'invention concerne aussi un procédé d'assemblage d'un système de transmission selon le second mode de réalisation Ce procédé est similaire à au procédé d'assemblage du système de transmission selon le premier mode de réalisation à cette différence qu'au cours de la troisième étape on fixe aussi la troisième pièce à la première pièce.

L'invention concerne enfin une turbomachine comportant une turbine à gaz accouplée à une soufflante ou à une hélice par l'intermédiaire d'un système de transmission du type décrit précédemment.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 représente une coupe axiale et partielle d'une turbomachine selon l'état de la technique comprenant un module de soufflante dont l'arbre de soufflante est entraîné par un arbre de puissance via un réducteur de vitesse installé dans une enceinte de lubrification ;
[Fig. 2] La figure 2 est une vue schématique illustrant les perturbations aérodynamiques crées par les moyens de fixation d'une couronne externe d'un réducteur de vitesse planétaire à train d'engrenage selon l'état de la technique lors de sa rotation ;
[Fig. 3] La figure 3 est une vue schématique, axiale et partielle d'une gouttière de récupération du lubrifiant selon un premier mode de réalisation de l'invention ;
[Fig. 4] La figure 4 est une vue en coupe axiale de la gouttière de récupération selon le premier mode de réalisation montée dans un carter fixe de la turbomachine ;
[Fig. 5] La figure 4 est une vue partielle en perspective fantôme de la gouttière de la figure 3 ;
[Fig. 6] La figure 5 est une vue schématique, axiale et partielle d'une gouttière de récupération du lubrifiant selon un second mode de réalisation de l'invention.
[Fig. 7] la figure 7 est un diagramme-bloc illustrant les étapes de montage d'un système de transmission selon l'invention.

### Description détaillée de l'invention

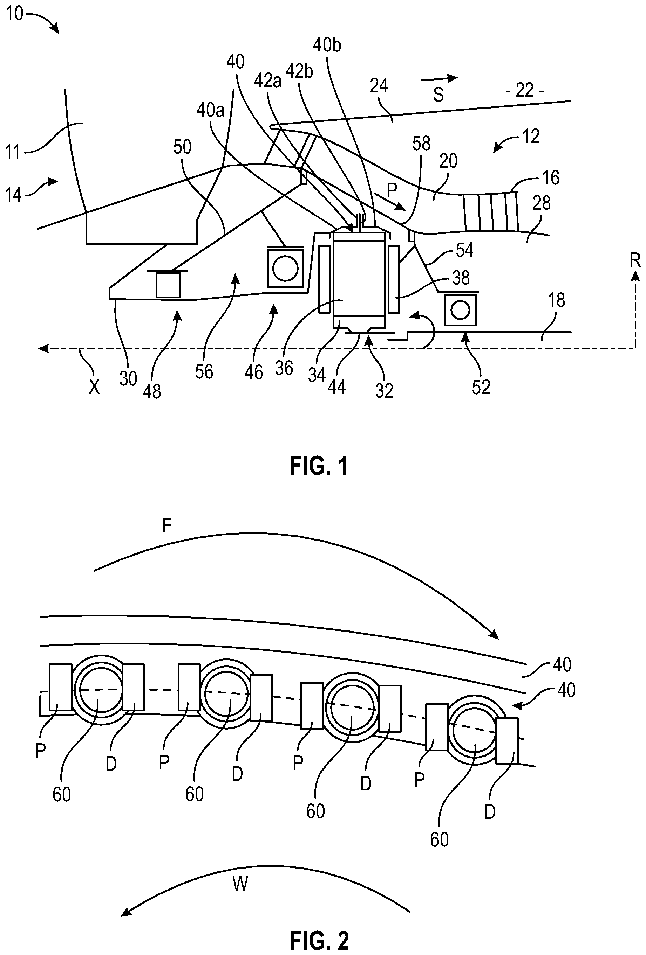

On a représenté à la figure 1 une vue en coupe axiale et partielle d'une turbomachine 10 d'axe longitudinal X, en particulier une turbomachine à double flux à laquelle s'applique l'invention. Sans limitation de l'invention, celle-ci peut s'appliquer par exemple à un turbopropulseur ou une turbomachine comprenant un doublet d'hélices contrarotatives tournant autour d'un axe longitudinal et désignée par l'expression « open rotor », acronyme anglo-saxon d'hélice non carénées.

La turbomachine 10 comprend de manière connue une nacelle externe (non représentée) recevant une turbine à gaz 12 en amont duquel est montée une soufflante 14. Dans la présente invention, et de manière générale, les termes « amont » et « aval » sont définis par rapport à la direction de la circulation des gaz dans la turbomachine qui est sensiblement parallèle à l'axe longitudinal X. De même, les termes « radial », « interne », « externe », « inférieur », « supérieur », « en-dessous » et « au-dessus » sont définis par rapport à un axe radial R perpendiculaire à l'axe longitudinal X et au regard de l'éloignement par rapport à l'axe longitudinal X. La turbine à gaz 12 comprend par exemple, d'amont en aval, un compresseur basse pression 16, un compresseur haute pression, une chambre de combustion, une turbine haute pression et une turbine basse pression (non représentés). Le compresseur haute pression est relié à la turbine haute pression via un arbre haute pression pour former un corps haute pression. De même, le compresseur basse pression 16 est relié à la turbine basse pression via un arbre basse pression 18 pour former un corps basse pression. L'arbre basse pression 18 et l'arbre haute pression sont centrés sur l'axe longitudinal X.

La soufflante 14 est ici carénée par un carter de soufflante (non représenté) solidaire de la nacelle externe. La soufflante 14 comprime l'air entrant dans la turbomachine qui se divise en un flux primaire P circulant dans une veine primaire 20 annulaire, laquelle traverse la turbine à gaz 12 et un flux secondaire S circulant dans une veine secondaire 22 annulaire entourant la turbine à gaz 12. En particulier, la veine primaire 20 et la veine secondaire 22 sont séparées par un carter inter-veines 24 annulaire entourant la turbine à gaz 2. La soufflante 14 comprend une série de pales 26 qui s'étendent chacune radialement vers l'extérieur et sont délimitées radialement par le carter de soufflante.

Un module de soufflante comportant la soufflante 14 est agencé en amont d'un carter interne 28 de la turbomachine qui est traversé par un arbre de rotor 30, ici l'arbre de soufflante qui est centré sur l'axe longitudinal X. L'arbre de soufflante 30 est entraîné en rotation par un arbre de puissance de la turbomachine via un système de transmission de puissance, permettant de réduire la vitesse de rotation de la soufflante 14. Cet arbre de puissance est l'arbre basse pression 18 dans le présent exemple. Le système de transmission de puissance permet l'agencement d'une soufflante avec un diamètre important lequel engendre une augmentation du taux de dilution.

Le système de transmission de puissance comprend un réducteur de vitesse 32 formé d'un train d'engrenage et connu sous l'acronyme anglais RGB pour « *Reduction GearBox ».* Le réducteur de vitesse est ici un réducteur planétaire.

Celui-ci comprend, tel qu'illustré de manière schématique sur la figure 1, un pignon dénommé ici solaire 34, des satellites 36, un porte-satellites 38, et une couronne externe 40, constituée de manière classique de deux-demi couronnes 40a, 40b, assemblées par leurs brides 42a, 42b à l'aide de premiers moyens de fixation axiaux tels que des vis et écrous, dont des dents internes engrènent avec les satellites 36. Dans le présent exemple, l'entrée du réducteur de vitesse 32 est couplée à l'arbre basse pression 18 tandis que la sortie du réducteur de vitesse 32 est couplée à l'arbre de soufflante 30.

Le réducteur de vitesse 32 comprend un arbre d'entrée 44, centré sur l'axe longitudinal X, solidaire en rotation avec l'arbre basse pression 18 et avec le solaire 34 suivant l'axe longitudinal X. La couronne externe 40, centrée également sur l'axe longitudinal X, est solidaire en rotation avec l'arbre de soufflante 30 autour de l'axe longitudinal X. Les satellites 36, par exemple au nombre de cinq, sont portés par le porte-satellites 38 qui est monté fixe. Les satellites 36 tournent chacun autour d'un axe sensiblement parallèle à l'axe longitudinal X. Chacun des satellites 36, réalisé sous la forme d'un pignon, présente des dents qui engrènent avec celles du solaire 34, sous la forme d'une roue dentée, et avec la couronne externe 40 dont chaque demi-couronne est munie de dentures internes de pas inversés l'un par rapport à l'autre. En fonctionnement, le solaire 34 est entraîné en rotation par l'arbre basse pression 18 suivant une première vitesse de rotation. Les satellites 36 sont entraînés en rotation par le solaire 34 autour de leur axe suivant une deuxième vitesse de rotation. La couronne externe 40 qui engrène avec les satellites 36 est entraînée en rotation autour de l'axe longitudinal X et entraîne l'arbre de soufflante 30. La couronne externe 40 tourne suivant une troisième vitesse de rotation et dans un sens opposé à celui du solaire 34.

De manière alternative, le réducteur de vitesse 32 pourrait être un réducteur de vitesse différentiel à train d'engrenage épicycloïdal. Dans ce cas de figure, le solaire, les satellites, le porte-satellites et la couronne externe seraient tous mobiles.

Comme l'illustre la figure 1, des premier et deuxième paliers 46 et 48 permettent de porter et de guider en rotation l'arbre de soufflante 10 afin de supporter les charges radiales et axiales que subit celui-ci. Ces premier et deuxième paliers 46, 48 comprennent des éléments roulants qui sont montés chacun entre une première et une deuxième bague. Chaque première bague est montée sur l'arbre de soufflante 30 et chaque deuxième bague est montée sur une virole 50. Les éléments roulants du premier palier 46, monté au voisinage du réducteur de vitesse 32, sont ici des billes tandis que les éléments roulants du deuxième palier 48 sont des rouleaux. Les premier et deuxième paliers 46, 48 sont montés en amont du réducteur de vitesse 32. Plus précisément encore, le deuxième palier 48 est monté en amont du premier palier 46. De même, un troisième palier 52 guide en rotation l'arbre basse pression 18. Ce troisième palier 18 est situé en aval du réducteur de vitesse 32. Le troisième palier 52 comprend également une bague interne portée par l'arbre basse pression 18 et une bague externe portée par un support aval 24.

Les premier, deuxième, et troisième paliers 46, 48, 52, ainsi que les roues et pignons d'engrenage du réducteur de vitesse 32 sont contenus dans une enceinte 56 de lubrification annulaire formée par un ou plusieurs carter(s) fixe(s) 58 de la turbomachine. La virole 50 et le support aval 54 sont fixés au carter fixe 58 annulaire. Ce carter fixe 26 étant lui-même solidarisé au carter interne 28 de la turbomachine. L'enceinte 56 s'étend axialement et radialement de part et d'autre du réducteur de vitesse 32. Comme cela est illustré sur la figure 1, cette enceinte 56 est traversée au moins en partie axialement par l'arbre de soufflante 30 et par l'arbre basse pression 18.

Dans l'enceinte 56 circule un lubrifiant tel que de l'huile permettant de lubrifier et de refroidir en permanence les paliers et les organes rotatifs du réducteur de vitesse durant la marche de la turbomachine pour garantir le bon fonctionnement des paliers et du réducteur 32 de vitesse. Pour cela, un système de lubrification (non représenté) comprend des canalisations qui pulvérisent de l'huile à travers le planétaire 34. L'huile est injectée dans les organes rotatifs au niveau des satellites 36 et du planétaire 34 puis de la couronne externe 40 par centrifugation grâce à des moyens d'éjection (non représentés). L'huile est également injectée au niveau des premier, deuxième et troisième paliers 56, 48, 52.

Dans un tel réducteur 32, l'huile est généralement projetée par la force centrifuge à travers la couronne 40, dont les deux demi-couronnes 40a, 40b comportent généralement des passages d'huile. L'huile ruisselle ensuite par gravité jusqu'à un point bas de l'enceinte 56 où elle est pour être à nouveau pompée vers le réducteur.

Pour éviter que l'huile ne stagne trop longtemps sur les parois de l'enceinte 56, on dispose généralement autour de la couronne 40 une gouttière annulaire 62 de récupération d'huile qui est chargée de la collecter.

Toutefois on a constaté que cette récupération nécessite d'être améliorée car les premiers moyens de fixation qui permettent l'assemblage des demi-couronnes 40a, 40b l'une à l'autre provoquent des perturbations aérodynamiques entre leurs brides 42a, 42b et la gouttière 62, sous la forme d'écoulement tourbillonnaires qui dissipent de la puissance mécanique en pure perte.

Comme l'illustre la figure 2, qui représente une bride 42a de la demi-couronne 40a munie de premiers moyens de fixation 60, lorsque la couronne 40 est mue en rotation selon le sens W, il s'exerce sur les premiers moyens de fixation 60 une F force opposée au mouvement du fait de l'interaction entre l'air et les premiers moyens de fixation. Cette force F créée sur les premiers moyens de fixation 60 des champs de pression P, et de dépression D représentées par des rectangles sur la figure 2.

Ces différentiels de pression ont pour conséquence de perturber l'écoulement sur les flancs des brides 40a, 40b, sous la forme d'écoulements tourbillonnaires qui ont pour conséquence de provoquer l'apparition de pertes d'énergie mécanique. En effet, l'écoulement de l'air est perturbé autour de toute cette géométrie, avec une entrée en provenance de l'enceinte 56 à l'extérieur de la couronne 40 vers les premiers moyens de fixation 60 lorsque la couronne 40 accélère sa rotation, et une sortie de l'air vers l'enceinte 56 lors du ralentissement de la couronne 40.

L'invention remédie à cet inconvénient en proposant une gouttière 62 limitant ces inconvénients.

À cet effet, l'invention propose un système de transmission de puissance du type précédemment décrit comportant une gouttière 62 améliorée.

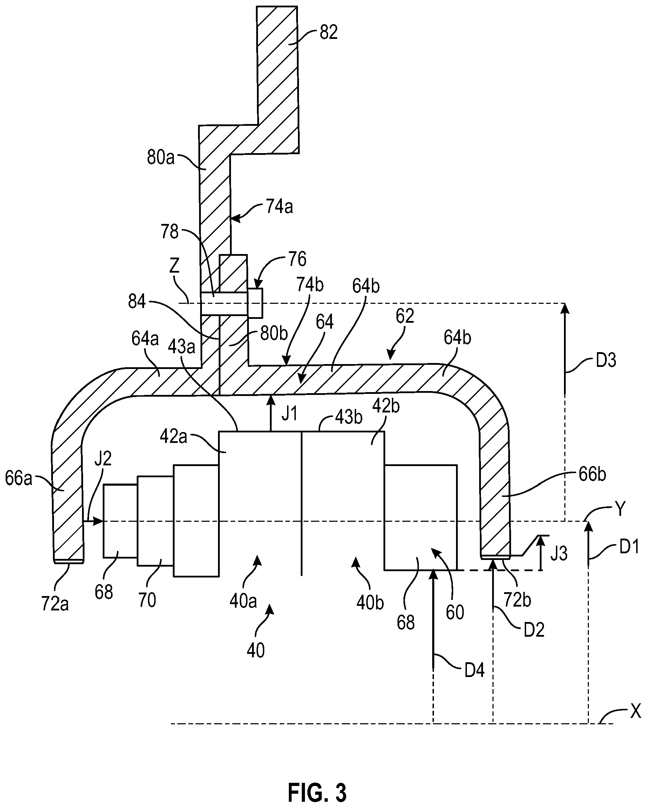

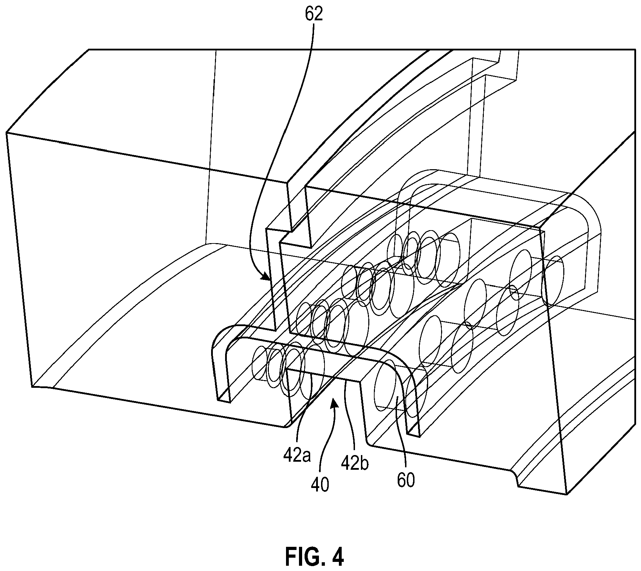

De manière connue, comme l'illustrent les figures 3 à 6, la gouttière 62 de récupération d'huile centrifugée est annulaire, d'axe X. Elle s'étend autour des brides 42a, 42b et comporte une section axiale une forme générale en U entourant les brides 42a, 42b. Les premiers moyens de fixation60 comportent par exemple des vis 68 qui traversent les brides 42a, 42b et qui serrent les brides l'une contre l'autre au moyen d'écrous 70. Des axes Y des premiers moyens de fixation et donc des vis 68 sont parallèles à l'axe X et répartis sur une circonférence de diamètre D1.

De manière connue également, la gouttière 62 comporte une paroi de fond annulaire 64 d'axe X reliée à deux parois annulaires latérales 66a, 66b sensiblement perpendiculaires à l'axe X.

Pour limiter les turbulences produites par les premiers moyens de fixation 60 lors de la rotation de la couronne 40 entre les brides 42a, 42b et la gouttière 62, celle-ci est configurée pour constituer un carénage des brides 42a, 42b de la couronne 40.

À cet effet, en premier lieu, les parois annulaires latérales de la gouttière 66a, 66b comprennent des bords périphériques, 72a, 72b internes ayant un diamètre interne D2 prédéterminé inférieur au diamètre D1. De la sorte, la gouttière 62 recouvre la majeure partie des premiers moyens de vissage 60, limitant ainsi le phénomène d'aspiration de l'air extérieur à la gouttière 62 à l'intérieur de celle-ci.

Par ailleurs, la gouttière 62 est configurée pour épouser au plus près les premiers moyens de fixation 60. À cet effet, la paroi de fond 64 est agencée, par rapport à des bords périphériques externes 43a, 43b des brides 42a, 42b, avec un jeu prédéterminé J1, et les parois 66 latérales 66a, 66b de la gouttière 62 sont agencées, par rapport aux premiers moyens de fixation 60, c'est-à-dire par rapport aux extrémités des vis 68, avec un jeu prédéterminé J2.

Avantageusement, le diamètre interne D2 prédéterminé et les jeux prédéterminés J1, J2 de la gouttière 62 sont configurés de manière à ce que la gouttière 62 coiffe les brides 42a, 42b et les premiers moyens de fixation 60, c'est-à-dire la vis 68. De la sorte, la gouttière 62 induit avantageusement un écoulement d'air exempt de perturbations entre les premiers moyens de fixation 60 et la gouttière 62 lors de la rotation de la couronne 40.

La détermination de ce diamètre interne D2 et des jeux prédéterminés J1, J2 résulte d'un calcul au moyen d'un logiciel de simulation des écoulements d'air entre les premiers moyens de fixation 60, les brides 42a, 42b, et la gouttière 62. Ces diamètre interne D2 et jeux J1, J2 sont donc ainsi calculés au plus juste pour minimiser les possibilités d'écoulements tourbillonnaires, et donc être ajustés pour que la gouttière 62 soit agencée au plus près des premiers moyens de fixation 60, des brides 42a, 42b, tout en maintenant une distance minimum par rapport à ceux-ci compte-tenu des déplacements axiaux de la couronne 40 au cours de sa rotation, des dispersions de fabrication de celle-ci sur son diamètre, et de la dilatation de ces pièces lors de leur fonctionnement.

La gouttière 62 étant agencée au plus près des premiers moyens de fixation 60 des brides 42a, 42b, il est avantageux que cette gouttière 62, pour permettre son montage, soit formée par un assemblage axial d'au moins deux pièces, 74a, 74b dont une première pièce 74a comprend au moins une partie 64a de la paroi de fond 64, et dont une deuxième pièce 74b comprend une des parois latérales 66b. Les première et deuxième pièces 74a, 74b sont fixées l'une à l'autre par des seconds moyens de fixation 76 comprenant par exemple des vis dont des axes Z sont parallèles à l'axe X et qui sont réparties sur une circonférence de diamètre D3 supérieur à D1. Les seconds moyens de fixation 76 comportent par exemple des vis 78.

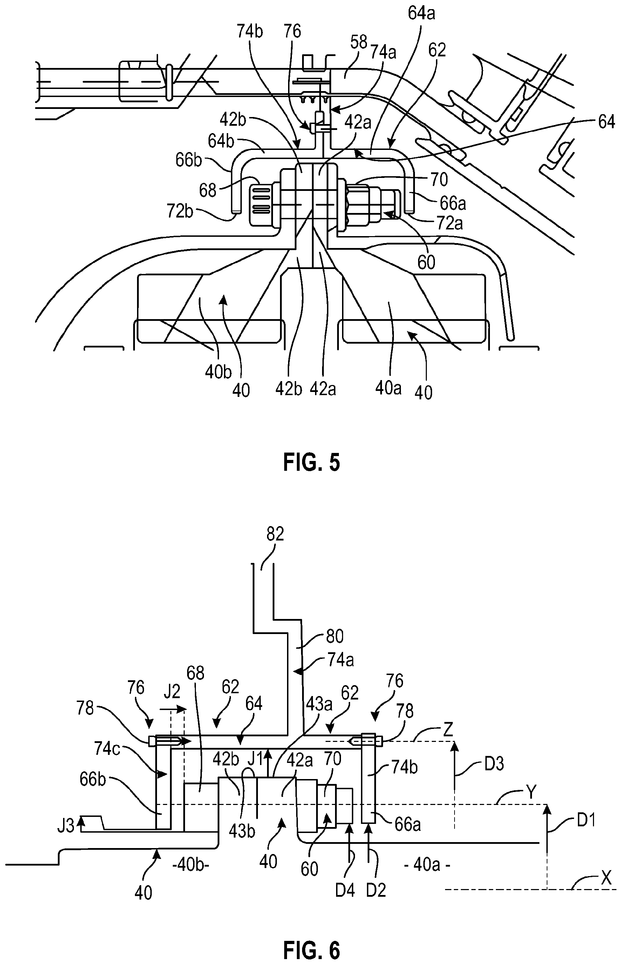

Selon un premier mode de réalisation de l'invention qui a été représenté aux figures 3, 4 et 5, la première pièce 74a comprend une des parois latérales 66a, une partie 64a de la paroi de fond 64 et une première collerette annulaire de fixation 80a se prolongeant radialement vers l'extérieur pour former une partie 82 de fixation de la gouttière 62. Comme l'illustre la figure 5, qui représente la gouttière 62 de l'autre côté, c'est par cette partie de fixation 82 que la gouttière 62 est fixée au carter annulaire 58 qui entoure le réducteur.

Dans ce premier mode de réalisation de l'invention, la deuxième pièce 74b comprend l'autre paroi latérale 66b et une autre partie 64b de la paroi de fond 64, et une seconde collerette 80b annulaire de fixation qui est destinée à être fixée à la première collerette 80a. On comprendra que les première et seconde collerettes 80a, 80b sont configurées pour être fixées axialement l'une à l'autre. À cet effet, et de manière non limitative de l'invention, la première collerette 80a comporte une gorge annulaire 84 dans laquelle est reçue la seconde collerette 80b, et les deux collerettes sont assemblées par les seconds moyens de fixation 76, c'est-à-dire traversées par les vis 78 qui les assemblent l'une à l'autre.

Selon un second mode de réalisation de l'invention qui a été représenté à la figure 6, la première pièce 74a comprend la paroi de fond 64 et une unique collerette annulaire de fixation 80 se prolongeant radialement vers l'extérieur pour former une partie 82 de fixation du dispositif de récupération, comme précédemment. La deuxième pièce 74b comprend une des parois latérales 66a de la gouttière 62 et une troisième pièce 74c de la gouttière comprend l'autre paroi latérale 66b. La deuxième pièce 74b et la troisième pièce 74c sont fixées de part et d'autre de la première pièce 74a, non pas comme précédemment au niveau de la collerette annulaire 80, mais aux extrémités axiales de la paroi de fond 64, par l'intermédiaire de seconds moyens de fixation 76, c'est-à-dire de préférence par l'intermédiaire de vis 78 d'axes Z. Comme précédemment, les axes Z des vis 68 sont parallèles à l'axe X et répartis sur une circonférence de diamètre D3 supérieur à D1.

À titre d'exemple, et de manière non limitative de l'invention, dans l'un ou l'autre de ces deux modes de réalisation, la paroi de fond 64 et les bords périphériques externes 43a, 43b des brides annulaires 42a, 42b des demi-couronnes 40a, 40b sont séparés par un jeu radial J1 compris entre 5 et 10 mm. Ce jeu correspond à une valeur courante pour un réducteur standard, il peut néanmoins être inférieur si le dimensionnement du système d'évacuation d'huile le permet.

Chacune des parois latérales 66a, 66b est séparée des premiers moyens de fixation 68 par un jeu axial J2 compris entre 4 et 8 mm.

Cette plage de valeurs correspond d'une part à une valeur minimale de 4mm de sécurité permettant de parer à un possible déplacement axial de la couronne accompagnant un déplacement axial du réducteur. D'autre part, la valeur maximale de 8mm permet de ne pas avoir un gradient élevé de vitesse de l'air entre les premiers moyens de fixation 68 et la gouttière, qui diminueraient l'effet de carénage de la gouttière et risqueraient de permettre à l'écoulement de sortir de la gouttière.

Le diamètre interne D2 est séparé, par rapport à un diamètre minimal D4 d'une circonférence passant par les premiers moyens de vissage 68, qui a été représenté aux figures 3 et 6 par un jeu radial J3 d'au plus 1 mm. On comprendra donc qu'ainsi les parois latérales 66a, 66 b s'étendent au droit de la majeure partie des premiers moyens de fixation 68.

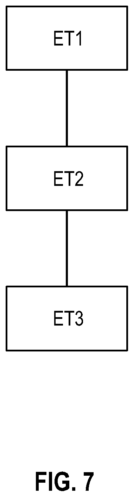

Dans cette configuration, comme l'illustrent la figure 3 et la figure 7, un système de transmission comportant une gouttière 62 selon le premier mode de réalisation de l'invention peut être assemblé par un procédé comportant en premier lieu une première étape ET1 au cours de laquelle on fixe la partie de fixation 82 de la première pièce 74a au carter fixe annulaire 58 du réducteur. Puis, au cours d'une deuxième étape ET2, on met en position les demi-couronnes du réducteur. Cette opération étant une opération d'assemblage du réducteur largement connu de la technique, elle ne sera pas détaillée plus avant dans la présente description.

Puis, au cours d'une troisième étape ET3, on fixe la deuxième pièce 74b à la première pièce 74a. En particulier, on met en position la seconde collerette 80b de la deuxième pièce 74b dans la gorge annulaire 84 de la première collerette 80a de la première pièce 74a, et les deux collerettes sont ensuite assemblées par les seconds moyens de fixation 76, c'est-à-dire traversées par les vis 78 qui les assemblent l'une à l'autre.

L'assemblage d'un système de transmission selon le second mode de réalisation de l'invention est sensiblement similaire. Comme l'illustrent les figure 6 et la figure 7, il peut être réalisé selon un procédé comportant une première étape ET1 au cours de laquelle on fixe la partie de fixation 82 de la première pièce 74 au carter fixe annulaire 58 du réducteur. Puis, au cours d'une deuxième étape ET2, on met en positon les demi-couronnes 40a, 40b du réducteur. Enfin, au cours d'une troisième étape ET3, on fixe les deuxième et troisième pièces 74b et 74c à la première pièce 74a. En particulier, on fixe les parois latérales 66a et 66b aux extrémités de la paroi de fond 64 à l'aide des seconds moyens de fixation 76, c'est-à-dire dans le cas qui a été représenté ici, à l'aide des vis 78.

L'invention permet donc avantageusement de disposer d'un système de transmission de puissance comportant une gouttière 62 de récupération d'huile minimisant les pertes aérodynamiques. Un tel système de transmission de puissance peut être utilisé dans le cadre d'une turbomachine comportant une turbine à gaz accouplée à une soufflante ou à une hélice par l'intermédiaire de ce système de transmission de puissance.

## Revendications

1. Système de transmission de puissance pour une turbomachine d'aéronef, comportant :
- un réducteur de vitesse (32) comprenant un pignon solaire (34) mobile en rotation autour d'un axe X, une couronne mobile (40) en rotation autour de l'axe X, et des pignons satellites (36) portés par un porte-satellites (38), engrenant avec le pignon solaire (34) et la couronne (40), ladite couronne (40) comportant deux demi-couronnes (40a, 40b) portant chacune des dents d'engrènement avec les pignons satellites (36) et comportant des brides annulaires (42a, 42b) externes d'orientation radiale qui sont serrées l'une contre l'autre par des premiers moyens de fixation (60),qui traversent lesdites brides (42a, 42b), des axes Y desdits premiers moyens de fixation (60), étant parallèles à l'axe X et répartis sur une circonférence de diamètre D1,
- une gouttière annulaire (62) de récupération d'huile centrifugée, s'étendant autour desdites brides (42a, 42b), cette gouttière ayant en section axiale une forme générale en U entourant les brides (42a, 42b) et comportant une paroi de fond (64) annulaire d'axe X reliée à deux parois annulaires latérales (66a, 66b) sensiblement perpendiculaires à l'axe X,
**caractérisé en ce que** :
- les parois annulaires latérales (66a, 66b) de la gouttière (62) comprennent des bords périphériques internes (72a, 72b) ayant un diamètre interne D2 prédéterminé inférieur au diamètre D1,
- la paroi de fond (64) et les parois latérales (66a, 66b) de la gouttière (62) sont agencées, respectivement par rapport à des bords périphériques externes (43a, 43b) des brides (42a, 42b) et par rapport aux premiers moyens de fixation (60) avec des jeux prédéterminés J1 et J2,
- ledit diamètre interne D2 prédéterminé et lesdits jeux prédéterminés J1, J2 de la gouttière (62) étant configurés de manière à ce que la gouttière (62) coiffe les brides (42a, 42b) et les premiers moyens de fixation (60),
- et **en ce que** la gouttière (62) est formée par un assemblage axial d'au moins deux pièces (74a, 74b), dont une première pièce (74a) comprend au moins une partie de la paroi de fond (64), et dont une deuxième pièce (74b) comprend une des parois latérales (66b).

2. Système de transmission selon la revendication précédente, **caractérisé en ce que** les première et deuxième pièces (74a, 74b) sont fixées l'une à l'autre par des seconds moyens de fixation (76) dont des axes Z sont parallèles à l'axe X et qui sont répartis sur une circonférence de diamètre D3 supérieur à D1.

3. Système de transmission selon l'une des revendications précédentes, **caractérisé en ce que** :
- la première pièce (74a) comprend une des parois latérales (66a), une partie (64a) de la paroi de fond (64) et une première collerette annulaire (80a) de fixation se prolongeant radialement vers l'extérieur pour former une partie de fixation (82) de la gouttière (62), et
- la deuxième pièce (74b) comprend l'autre paroi latérale (66b) et une autre partie (64b) de la paroi de fond (64), et une seconde collerette annulaire de fixation (80b), les première et seconde collerettes (80a, 80b) étant configurées pour être fixées axialement l'une à l'autre.

4. Système de transmission selon l'une des revendications 1 ou 2, **caractérisé en ce que** :
- la première pièce (74a) comprend la paroi de fond (64) et une unique collerette annulaire de fixation (80) se prolongeant radialement vers l'extérieur pour former une partie (82) de fixation de la gouttière (62),
- la deuxième pièce (74b) comprend une des parois latérales (66a) de la gouttière (62) et,
- une troisième pièce (74c) de la gouttière (62) comprend l'autre paroi latérale (66b).

5. Système de transmission selon l'une des revendications précédentes, **caractérisé en ce que** la paroi de fond (64) et les bords périphériques externes (43a, 43b) des brides annulaires (42a, 42b) des demi-couronnes (40a, 40b) sont séparés par le jeu radial J1 qui est compris entre 5 et 10 mm.

6. Système de transmission selon l'une des revendications précédentes, **caractérisé en ce que** chacune des parois latérales (66a, 66b) est séparée des premiers moyens de fixation (60, 62) par le jeu axial J2 qui est compris entre 4 et 8 mm.

7. Système de transmission selon l'une des revendications précédentes, **caractérisé en ce que** le diamètre interne D2 est séparé, par rapport à un diamètre minimal d'une circonférence passant par les premiers moyens de fixation (60), par un jeu radial J3 d'au plus 1 mm.

8. Procédé d'assemblage d'un système de transmission selon l'une des revendications 1 ou 2, **caractérisé en ce qu'**il comporte :
- une première étape (ET1) au cours de laquelle on fixe la partie de fixation (82) de la première pièce (74a) à un carter fixe annulaire (58) du réducteur,
- une deuxième étape (ET2) au cours de laquelle on met en positon les demi-couronnes (40a, 40b) du réducteur,
- une troisième étape (ET3) au cours de laquelle on fixe la deuxième pièce (74b) à la première pièce (74a).

9. Procédé d'assemblage d'un système de transmission selon la revendication précédente prise en combinaison avec la revendication 4, **caractérisé en ce qu'**au cours de la troisième étape (ET3) on fixe aussi la troisième pièce (74c) à la première pièce (74a).

10. Turbomachine (10) comportant une turbine à gaz (12) accouplée à une soufflante (14) ou à une hélice par l'intermédiaire d'un système de transmission selon l'une des revendications 1 à 7.

## Patentansprüche

1. Leistungsübertragungssystem für ein Turbotriebwerk eines Luftfahrzeugs, umfassend:
- ein Untersetzungsgetriebe (32), umfassend ein um eine Achse X herum rotationsbewegliches Sonnenrad (34), eine um die Achse X herum rotationsbewegliche Krone (40), und von einem Satellitenträger (38) getragene Satellitenräder (36), die mit dem Sonnenrad (34) und der Krone (40) in Eingriff vorliegen, wobei die Krone (40) zwei Halbkronen (40a, 40b) umfasst, die jeweils Zähne zum Eingriff mit den Satellitenträgern (36) und ringförmige externe Flansche (42a, 42b) mit radialer Orientierung tragen, die durch erste Befestigungsmittel (60), die die Flansche (42a, 42b) durchqueren, gegeneinander geklemmt sind, umfassen, wobei die Achsen Y des ersten Befestigungsmittels (60) parallel zu der Achse X und auf einem Umfang mit Durchmesser D1 verteilt sind,
- eine ringförmige Rinne (62) zur Rückgewinnung von zentrifugiertem Öl, die sich um die Flansche (42a, 42b) herum erstreckt, wobei diese Rinne im axialen Schnitt eine allgemeine U-Form aufweist, die die Flansche (42a, 42b) umgibt, und umfassend eine ringförmige Rückwand (64) mit Achse X, die mit zwei ringförmigen seitlichen Wänden (66a, 66b) im Wesentlichen senkrecht zu der Achse X verbunden ist,
**dadurch gekennzeichnet, dass**:
- die ringförmigen seitlichen Wände (66a, 66b) der Rinne (62) interne periphere Ränder (72a, 72b) umfassen, die einen vorgegebenen internen Durchmesser D2 aufweisen, der kleiner als der Durchmesser D1 ist,
- die Rückwand (64) und die seitlichen Wände (66a, 66b) der Rinne (62) bezüglich externen peripheren Ränder (43a, 43b) der Flansche (42a, 42b) und bezüglich ersten Befestigungsmittel (60) jeweils mit vorgegebenen Spielräumen J1 und J2 angeordnet sind,
- der interne vorgegebene Durchmesser D2 und die vorgegebenen Spielräume J1, J2 der Rinne (62) derart konfiguriert sind, dass die Rinne (62) die Flansche (42a, 42b) und die ersten Befestigungsmittel (60) bedeckt,
- und dadurch, dass die Rinne (62) durch eine axiale Montage von mindestens zwei Stücken (74a, 74b) gebildet ist, von denen ein erstes Stück (74a) mindestens einen Teil der Rückwand (64) umfasst und von denen ein zweites Stück (74b) eine der seitlichen Wände (66b) umfasst.

2. Übertragungssystem nach dem vorstehenden Anspruch, **dadurch gekennzeichnet, dass** das erste und zweite Stück (74a, 74b) durch zweite Befestigungsmittel (76) aneinander befestigt sind, von denen Achsen Z parallel zu der Achse X sind und die auf einem Umfang mit Durchmesser D3, größer als D1, verteilt sind.

3. Übertragungssystem nach einem der vorstehenden Ansprüche, **dadurch gekennzeichnet, dass**:
- das erste Stück (74a) eine der seitlichen Wände (66a), einen Teil (64a) der Rückwand (64) und einen ersten ringförmigen Befestigungskragen (80a) umfasst, der sich radial nach außen verlängert, um einen Befestigungsteil (82) der Rinne (62) zu bilden, und
- das zweite Stück (74b) die andere seitliche Wand (66b) und einen anderen Teil (64b) der Rückwand (64) und einen zweiten ringförmigen Befestigungskragen (80b) umfasst, wobei der erste und zweite Kragen (80a, 80b) konfiguriert sind, um axial aneinander befestigt zu werden.

4. Übertragungssystem nach einem der Ansprüche 1 oder 2, **dadurch gekennzeichnet, dass**:
- das erste Stück (74a) die Rückwand (64) und einen einmaligen ringförmigen Befestigungskragen (80) umfasst, der sich radial nach außen verlängert, um einen Befestigungsteil (82) der Rinne (62) zu bilden,
- das zweite Stück (74b) eine der seitlichen Wände (66a) der Rinne (62) umfasst, und
- ein dritter Teil (74c) der Rinne (62) die andere seitliche Wand (66b) umfasst.

5. Übertragungssystem nach einem der vorstehenden Ansprüche, **dadurch gekennzeichnet, dass** die Rückwand (64) und die externen peripheren Ränder (43a, 43b) der ringförmigen Flansche (42a, 42b) der Halbkronen (40a, 40b) durch den radialen Spielraum J1 getrennt sind, der zwischen 5 und 10 mm beträgt.

6. Übertragungssystem nach einem der vorstehenden Ansprüche, **dadurch gekennzeichnet, dass** jede der seitlichen Wände (66a, 66b) von den ersten Befestigungsmitteln (60, 62) durch den axialen Spielraum J2 getrennt ist, der zwischen 4 und 8 mm beträgt.

7. Übertragungssystem nach einem der vorstehenden Ansprüche, **dadurch gekennzeichnet, dass** der interne Durchmesser D2 bezüglich eines minimalen Durchmesser eines Umfangs, der durch die ersten Befestigungsmittel (60) verläuft, durch einen radialen Spielraum J3 von höchstens 1 mm getrennt ist.

8. Montageverfahren eines Übertragungssystems nach einem der Ansprüche 1 oder 2, **dadurch gekennzeichnet, dass** es umfasst:
- einen ersten Schritt (ET1), im Laufe dessen der Befestigungsteil (82) des ersten Stücks (74a) an einem festen ringförmigen Gehäuse (58) des Getriebes befestigt wird,
- einen zweiten Schritt (ET2), im Laufe dessen die Halbkronen (40a, 40b) des Getriebes in Position gebracht werden,
- einen dritten Schritt (ET3), im Laufe dessen das zweite Stück (74b) an dem ersten Stück (74a) befestigt wird.

9. Montageverfahren eines Übertragungssystems nach dem vorstehenden Anspruch in Kombination mit Anspruch 4, **dadurch gekennzeichnet, dass** im Laufe des dritten Schritts (ET3) der dritte Teil (74c) an dem ersten Stück (74a) befestigt wird.

10. Turbotriebwerk (10), umfassend eine mittels eines Übertragungssystems nach einem der Ansprüche 1 bis 7 mit einem Gebläse (14) oder einem Propeller gekoppelte Gasturbine (12).

## Claims

1. A power transmission system for an aircraft turbomachine, comprising:
- a speed reducer (32) comprising a sun pinion (34) which can rotate about an axis X, a ring gear (40) which is mobile in rotation about the axis X, and planet pinions (36) carried by a planet carrier (38), meshing with the sun pinion (34) and the ring gear (40), said ring gear (40) comprising two half-ring gears (40a, 40b) each carrying teeth for meshing with the planet pinions (36) and comprising radially oriented external annular flanges (42a, 42b) which are tightened against each other by first attachment means (60), which pass through said flanges (42a, 42b), axes Y of said first attachment means (60) being parallel to the axis X and distributed over a circumference of diameter D1,
- an annular channel (62) for recovering centrifuged oil, extending around said flanges (42a, 42b), this channel having in axial cross-section a general U shape surrounding the flanges (42a, 42b) and comprising an annular bottom wall (64) of axis X connected to two annular lateral walls (66a, 66b) substantially perpendicular to the axis X,
**characterised in that**:
- the annular lateral walls (66a, 66b) of the channel (62) comprise internal peripheral edges (72a, 72b) having a predetermined internal diameter D2 less than the diameter D1,
- the bottom wall (64) and the lateral walls (66a, 66b) of the channel (62) are arranged, respectively, with respect to external peripheral edges (43a, 43b) of the flanges (42a, 42b) and with respect to the first attachment means (60) with predetermined clearances J1 and J2,
- said predetermined internal diameter D2 and said predetermined clearances J1, J2 of the channel (62) being configured such that the channel (62) covers the flanges (42a, 42b) and the first attachment means (60),
- and **in that** the channel (62) is formed by an axial assembly of at least two parts (74a, 74b), a first part (74a) of which comprises at least one portion of the bottom wall (64), and a second part (74b) of which comprises one of the lateral walls (66b).

2. The transmission system according to the preceding claim, **characterised in that** the first and second parts (74a, 74b) are attached to each other by second attachment means (76) whose axes Z are parallel to the axis X and which are distributed over a circumference of diameter D3 greater than D1.

3. The transmission system according to one of the preceding claims, **characterised in that**:
- the first part (74a) comprises one of the lateral walls (66a), a portion (64a) of the bottom wall (64) and a first annular attachment collar (80a) extending radially outwardly to form an attachment portion (82) of the channel (62), and
- the second part (74b) comprises the other lateral wall (66b) and another portion (64b) of the bottom wall (64), and a second annular attachment collar (80b), the first and second collars (80a, 80b) being configured to be axially attached to each other.

4. The transmission system according to one of claims 1 or 2, **characterised in that**:
- the first part (74a) comprises the bottom wall (64) and a single annular attachment collar (80) extending radially outwardly to form an attachment portion (82) of the channel (62),
- the second part (74b) comprises one of the lateral walls (66a) of the channel (62) and,
- a third part (74c) of the channel (62) comprises the other lateral wall (66b).

5. The transmission system according to one of the preceding claims, **characterised in that** the bottom wall (64) and the external peripheral edges (43a, 43b) of the annular flanges (42a, 42b) of the half-ring gears (40a, 40b) are separated by the radial clearance J1 which is between 5 and 10 mm.

6. The transmission system according to any of the preceding claims, **characterised in that** each of the lateral walls (66a, 66b) is separated from the first attachment means (60, 62) by the axial clearance J2 which is between 4 and 8 mm.

7. The transmission system according to any of the preceding claims, **characterised in that** the internal diameter D2 is separated, relative to a minimum diameter of a circumference passing through the first attachment means (60), by a radial clearance J3 of at most 1 mm.

8. A method for assembling a transmission system according to one of claims 1 or 2, **characterised in that** it comprises:
- a first step (ET1) in which the attachment portion (82) of the first part (74a) is attached to an annular stationary casing (58) of the reducer,
- a second step (ET2) in which the half-ring gears (40a, 40b) of the reducer are brought into position,
- a third step (ET3) in which the second part (74b) is attached to the first part (74a).

9. The method for assembling a transmission system according to the preceding claim taken in combination with claim 4, **characterised in that** during the third step (ET3) the third part (74c) is also attached to the first part (74a).

10. A turbomachine (10) comprising a gas turbine (12) coupled to a fan (14) or to a propeller by means of a transmission system according to any of claims 1 to 7.
